# EUROPÄISCHE PATENTSCHRIFT

(11) **EP 2 394 062 B1**
(45) Veröffentlichungstag und Bekanntmachung des Hinweises auf die Patenterteilung: **20.04.2016**
(21) Anmeldenummer: 10704495.0
(22) Anmeldetag: 20.01.2010
(51) Int. Cl.: F04D 29/26, F01D 5/02, F16B 23/00

(54) **ABGASTURBOLADER SOWIE SYSTEM MIT ABGASTURBOLADER**
TURBOCHARGER AND SYSTEM COMPRISING A TURBOCHARGER
TURBOCOMPRESSEUR ET SYSTÈME COMPRENANT UN TURBOCOMPRESSEUR

(30) Priorität: 06.02.2009 DE 102009007945
(43) Veröffentlichungstag der Anmeldung: 14.12.2011
(73) Patentinhaber: Flaig, Hartmut, 78554 Aldingen (DE)
(72) Erfinder: HOLSCHER, Winfried, K., W., 78234 Engen (DE)
(74) Vertreter: Wagner, Kilian
(86) Internationale Anmeldenummer: PCT/EP2010/000325
(87) Internationale Veröffentlichungsnummer: WO 2010/089028

(56) Entgegenhaltungen:
- WO-A2-01/40660
- AU-B2- 752 416
- DE-A1- 3 006 464
- DE-A1- 3 711 489
- DE-A1- 10 008 728
- US-A- 755 804
- US-A- 5 022 823
- US-A- 5 163 816
- US-A1- 2002 001 522

## Beschreibung

Die Erfindung betrifft einen Abgasturbolader, aufweisend eine rotierbare Welle, ein auf der Welle sitzendes Flügelrad und ein Gewindeelement zum axialen Sichern des Flügelrades, wobei das Gewindeelement ein Gewinde und einen Antriebsabschnitt zum Zusammenwirken mit einem Antriebswerkzeug zum Zwecke des Festziehens oder Lösens des Gewindeelementes von einem Gegengewindeelement aufweist. Ferner betrifft die Erfindung ein System mit einem ein Gewindeelement aufweisenden Abgasturbolader und einem Antriebswerkzeug zum Zusammenwirken mit dem Antriebsabschnitt des Gewindeelementes.

Bekannt sind Abgasturbolader in Kraftfahrzeugen, bei denen ein Flügelrad axial auf einer Welle mittels einer Hutmutter gesichert ist. Die in der Praxis zu diesem Zweck zum Einsatz kommenden Flanschmuttern weisen einen Sechskantantrieb oder einen Zwölfkantantrieb auf, durch den in Betrieb des Turboladers bei den in der Praxis auftretenden, sehr hohen Umdrehungszahlen unerwünschte Verwirbelungen bewirkt werden.

Aus der US 2002/001522 A1 ist ein gattungsgemäßer Abgasturbolader bekannt.

Die US 755 804 A, offengelegt am 29. März 1904 beschäftigt sich mit diebstahlsicheren Schrauben mit einem Konusantrieb.

Weiterhin zum Stand der Technik werden genannt die US 5,022,823 A, die DE 37 11 489 A1, die US 5,163,816 A, die WO 01/40660 A2 sowie die DE 100 08 728 A1.

Die DE 30 06 464 A1 beschreibt eine Hutmutter mit einem als Außenkonusabschnitt ausgeformten Antriebsabschnitt und mit einem Umfangsbund, und die AU 752 416 B2 beschreibt eine Sicherheitsschraube.

Der Erfindung liegt die Aufgabe zugrunde, einen Abgasturbolader mit einem Gewindeelement zum axialen Sichern des Flügelrades anzugeben, wobei unerwünschte Verwirbelungen im Betrieb des Abgasturboladers vermieden werden sollen. Darüber hinaus besteht die Aufgabe darin, ein System zum komfortablen Festziehen und/oder Lösen eines wie zuvor beschriebenen ausgebildeten Gewindeelementes anzugeben.

Diese Aufgabe wird hinsichtlich des Abgasturboladers mit den Merkmalen des Anspruchs 1 und hinsichtlich des Systems mit den Merkmalen des Anspruchs 8 gelöst. Vorteilhafte Weiterbildungen der Erfindung sind in den Unteransprüchen angegeben.

Der Erfindung liegt der Gedanke zugrunde, bei einem Abgasturbolader den mindestens einen, vorzugsweise ausschließlich einen, Antriebsabschnitt des Gewindeelementes zur axialen Sicherung des Flügelrades rotationssymmetrisch als Außenkonus auszuformen. Die Drehmomentübertragung auf den Antriebsabschnitt des Gewindeelementes zum Anziehen oder Lösen des Gewindeelementes von einem, vorzugsweise an der rotierbaren Welle ausgebildeten, Gegengewindes erfolgt bevorzugt mit einem entsprechenden formkongruenten Werkzeug reibschlüssig durch Haftreibung. Das Vorsehen eines außenkonusförmigen Antriebsabschnittes hat eine Vielzahl von Vorteilen. Das Gewindeelement mit einem außenkonusförmigen Antriebsabschnitt eignet sich insbesondere für den Fall, dass auf weitere, nicht-rotationssymmetrische Antriebsabschnitte verzichtet wird, ideal für den Einsatz in Abgasturboladern mit schnell rotierenden Wellen zur Sicherung von Flügelrädern auf solchen rotierbaren Wellen. Ganz besonders bevorzugt ist eine Ausführungsform, bei der das Gewindeelement lediglich einen außenkonusförmigen Antriebsabschnitt aufweist. Mit Vorteil ist die Oberfläche des Antriebsabschnittes nicht rau sondern glatt ausgeführt.

Ein weiterer Vorteil besteht darin, dass sich bei einem Abgasturbolader ein nach dem Konzept der Erfindung ausgebildetes Gewindeelement nicht mit bekannten Standard-Werkzeugen festziehen oder lösen lässt.

Die Erfindung führt also auf einen Abgasturbolader, umfassend ein wie zuvor beschrieben ausgebildetes Gewindeelement. Der Abgasturbolader umfasst eine rotierbare Welle, auf der mittels des Gewindeelementes ein Flügelrad fixiert ist.

Erfindungsgemäß ist dabei das Gewindeelement als strömungsgünstige Hutmutter ausgebildet. Besonders zweckmäßig ist es, wenn die Welle mit mehreren tausend Umdrehungen pro Minute während des Betriebs rotiert.

Erfindungsgemäß schließt an den Außenkonusabschnitt auf der von dem Flügelrad abgewandten Seite ein gerundeter Kuppelabschnitt an.

Erfindungsgemäß ist vorgesehen, dass das als Hutmutter ausgebildete Gewindeelement auf der dem Flügelrad zugewandten Seite einen Umfangsbund aufweist. Der Umfangsbund schließt das Gewindeelement flügelradseitig ab.

Ein weiterer wesentlicher Vorteil des nach dem Konzept der Erfindung ausgebildeten Abgasturboladers besteht darin, dass sich die rotierenden Bauteile, umfassend das mindestens eine Flügelrad sowie die rotierbare Welle und das Gewindeelement wesentlich einfacher automatisiert auswuchten lassen als ein Abgasturbolader nach dem Stand der Technik, bei welchem das Gewindeelement einen Sechskant- oder Zwölfkantantrieb aufweist. Dies gilt insbesondere dann, wenn das Gewindeelement (vor dem Auswuchten) rotationssymmetrisch ausgeformt ist, dass also auf einen nicht-konischen Antriebsabschnitt verzichtet wird, da die zu Auswuchtzwecken tatsächlich maschinell automatisch abzutragende Materialmenge wesentlich einfacher bestimmt werden kann, als bei einem mehreckigen Gewindeelement, da bei einem mehreckigen Gewindeelement der Materialabtrag abhängig ist von der Umfangsposition, an der eine Auswuchtvorrichtung das Gewindeelement zu Zwecken des Materialabtrags anhält - bei einem erfindungsgemäßen Gewindeelement ist der Materialabtrag unabhängig von der Umfangsposition immer gleich.

Wie eingangs angedeutet, ist eine Ausführungsform des Gewindeelementes besonders bevorzugt, bei der zusätzlich zu mindestens einem konusförmig ausgeformten Antriebsabschnitt kein nicht-konischer Antriebsabschnitt vorgesehen ist. Eine derartige Ausführungsform des Gewindeelementes eignet sich hervorragend zum Fixieren von Bauteilen auf schnell rotierenden Wellen, da aufgrund der ausschließlich rotationssymmetrischen Ausbildung des mindestens einen, vorzugsweise ausschließlich einen, Antriebsabschnittes Verwirbelungen vermieden werden, wie sie bei Schlüsselflächenantriebsabschnitten oder Rändelantriebsabschnitten etc. zwangsläufig auftreten.

Das als Mutter ausgebildete Gewindeelement umfasst mindestens ein Innengewinde, wobei das Innengewinde in einer Sacklochöffnung vorgesehen ist. Dabei ist die Mutter als Hutmutter mit abgerundetem Kopf ausgebildet. Derartige Hutmuttern eignen sich hervorragend zur Fixierung von Flügelrädern von Abgasturboladern auf schnell rotierenden Wellen.

Um eine ausreichend große Haftreibung zu Drehmomentübertragungszwecken realisieren zu können, ist eine Ausführungsform des Gewindeelementes bevorzugt, bei der der Konuswinkel kleiner als 10° ist. Unter dem Konuswinkel wird dabei der Winkel zwischen einer Längsmittelachse des Antriebsabschnittes und einer in einer gemeinsamen Ebene mit der Längsmittelachse liegenden Mantellinie des Antriebsabschnitts verstanden. Ganz besonders bevorzugt ist dieser Konuswinkel aus einem Winkelbereich zwischen etwa 0,2° und etwa 10°, besonders bevorzugt aus einem Winkelbereich zwischen etwa 0,2° und etwa 5°, weiter vorzugsweise zwischen etwa 0,5° und etwa 3°, noch weiter vorzugsweise zwischen etwa 0,8° und etwa 2°,gewählt. Besonders bevorzugt ist der Konuswinkel aus einem Winkelbereich zwischen etwa 0,9° und etwa 1,5° gewählt. Bei einer ganz besonders bevorzugten Ausführungsform beträgt der Winkel etwa 1° und 26 Minuten.

In Weiterbildung der Erfindung ist mit Vorteil vorgesehen, dass der Antriebsabschnitt kegelstumpfförmig ausgeformt ist.

In Weiterbildung der Erfindung ist mit Vorteil vorgesehen, dass der Übergangsbereich zwischen dem außenkonusförmigen Antrieb und dem Umfangsbund einen Radius aufweist, d.h. im Übergangsbereich im Längsschnitt des Gewindeelementes konkav ausgeformt ist, um die Strömungseigenschaften zur Minimierung von Verwirbelungen weiter zu optimieren.

Besonders bevorzugt ist eine Ausführungsform, bei der der Hut des als Hutmutter ausgebildeten Gewindeelementes auf der vom Flügelrad abgewandten Seite sich, vorzugsweise projektilartig, verjüngt um hiermit die Strömungseigenschaften weiter zu optimieren.

In Weiterbildung der Erfindung ist mit Vorteil vorgesehen, dass das, vorzugsweise vor dem Auswuchten rotationssymmetrische, Gewindeelement zur Gewährleistung eines optimierten Rundlaufs, d.h. zu Zwecken des Auswuchtens eine, insbesondere seitliche, vorzugsweise als Ausfräsung oder Ausbohrung ausgebildete, Aussparung, d.h. einen Materialabtrag aufweist. Insbesondere dann, wenn das Gewindeelement - vor dem Auswuchten - rotationssymmetrisch ausgebildet ist, wird das Auswuchten mit einer, insbesondere automatisch arbeitenden Auswuchtvorrichtung, mit Hilfe derer an einer bestimmten Stelle, insbesondere an der Umfangsposition der Unwucht, Material abgetragen, insbesondere abgefräst, wird erleichtert, da bei einem definierten Vorschub des Fräswerkzeugs immer eine definierte Materialmenge abgetragen wird, was bei vieleckigen, d.h. nicht-rotations-symmetrischen Gewindeelementen, wie sie im Stand der Technik zum Einsatz kommen nicht oder nur mit sehr hohem technischen Aufwand möglich ist. Ganz besonders befindet sich die Aussparung, d.h. der Materialabtrag im Bereich des außenkonischen Antriebs und/oder im Bereich des zuvor beschriebenen Umfangsbundes.

Die Erfindung führt auch auf ein System mit einem Abgasturbolader, aufweisend ein wie zuvor beschrieben ausgebildetes Gewindeelement und einem Schlagschrauber. Ganz besonders bevorzugt handelt es sich um einen Drehmomentschlagschrauber, also um einen Schlagschrauber mit einer Drehmomentbegrenzung. Weiter bevorzugt ist die Größe des maximal auf das Gewindeelement zu übertragenden Drehmomentes einstellbar.

Mit einem derartigen System lassen sich zum System gehörige Gewindeelemente optimal, vorzugsweise mit einem gewünschten maximalen Drehmoment, festziehen bzw. lösen. Die Kombination eines Schlagschraubers mit einem Gewindeelement ist deshalb optimal, da eine axiale Anpresskraft zur Gewährleistung der notwendigen Haftreibung nicht (nur) manuell aufgebracht werden muss, sondern automatisch und im Falle eines Schlagschraubers gepulst (d.h. in Pulsen) aufgebracht wird.

Zum Festziehen und/oder Lösen eines erfindungsgemäßen Gewindeelementes wird das Gewindeelement mit einem Drehmoment in Umfangsrichtung beaufschlagt. Kern des Verfahrens ist es, dass zusätzlich eine Anpresskraft in axialer Richtung aufgebracht wird, wobei die Anpresskraft so groß gewählt sein muss, dass eine ausreichende Haftreibung zwischen dem Werkzeug und dem Antriebsabschnitt wirkt.

Besonders bevorzugt ist es, wenn die axiale Anpresskraft gepulst aufgebracht wird.

Noch weiter bevorzugt ist es, wenn das maximale Drehmoment, mit dem das Gewindeelement in Umfangsrichtung beaufschlagt ist, begrenzt ist. Ganz besonders bevorzugt ist dieses maximale Drehmoment einstellbar.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: lediglich zu Erläuterungszwecken ein als Hutmutter ausgebildetes, nicht erfindungsgemäßes Gewindeelement mit einem außenkonischen Antriebsabschnitt für einen in Fig. 4 gezeigten Abgasturbolader,
- Fig. 2:: lediglich zu Erläuterungszwecken ein als Kopfschraube ausgebildetes, nicht erfindungsgemäßes Gewindeelement mit einem am hutförmigen Schraubenkopf ausgebildeten außenkonusförmigen Antriebsabschnitt für einen in Fig. 4 gezeigten Abgasturbolader,
- Fig. 3:: einen Schlagschrauber mit einem Antriebswerkzeugaufsatz, welcher einen Hohlkegel aufweist, der von formkongruent zu den in den Fig. 1 und 2 dargestellten außenkonusförmigen Antriebsabschnitten ausgebildet ist,
- Fig. 4:: ausschnittsweise eine als Abgasturbolader ausgebildete Vorrichtung, umfassend eine sehr schnell rotierbar antreibbare Welle, auf der ein Flügelrad mittels eines nicht erfindungsgemäßen hutmutterförmigen Innengewindeelementes zu Erläuterungszwecken, aufweisend einen außenkonusförmigen Antriebsabschnitt, axial fixiert ist,
- Fig. 5:: ein erfindungsgemäßes als Hutmutter ausgebildetes Gewindeelement mit flügelradseitigem Umfangsbund,
- Fig. 6:: ein ebenfalls als Hutmutter ausgebildetes Gewindeelement mit endseitigem Umfangsbund, wobei das rotationssymmetrische Gewindeelement sich an seiner Spitze, d.h. auf der vom Flügelrad abgewandten Seite projektilartig verjüngt,
- Fig. 7:: lediglich zu Erläuterungszwecken ein als Gewindeelement mit Durchgangsöffnung ausgebildetes, nicht gemäß der Erfindung ausgebildetes Gewindeelement ohne Umfangsbund, wobei dieses auch alternativ mit flügelradseitigem Umfangsbund realisierbar ist, und
- Fig. 8:: lediglich zu Erläuterungszwecken ein als Kopfschraube ausgebildetes, nicht erfindungsgemäßes Gewindeelement, wobei sich der Kopf der rotationssymmetrischen Schraube auf der vom Flügelrad abgewandten Seite projektilartig verjüngt.

In den Figuren sind gleiche Elemente und Elemente mit der gleichen Funktion mit den gleichen Bezugszeichen gekennzeichnet.

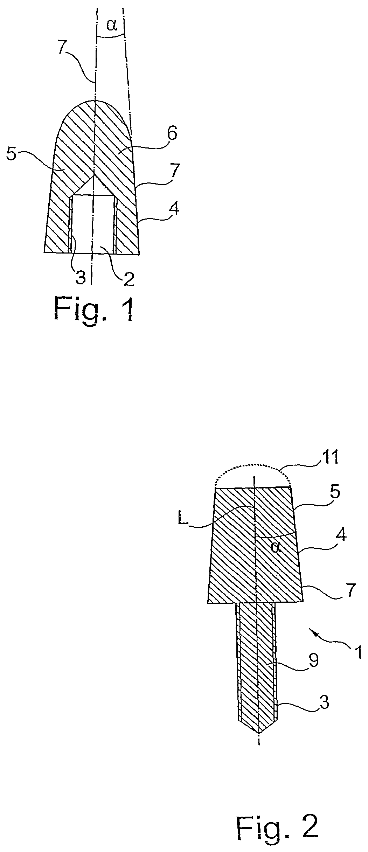

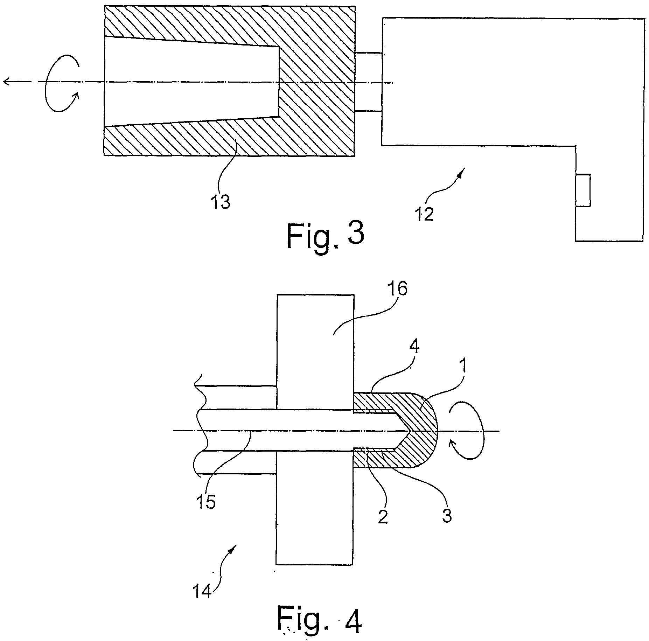

In Fig. 1 ist ein als Hutmutter ausgebildetes Gewindeelement 1 zum Fixieren eines Flügelrades auf einer Welle eines in Fig. 4 dargestellten Abgasturboladers gezeigt. Das Gewindeelement 1 umfasst eine stirnseitige Sacklochöffnung 2 mit einem als Innengewinde ausgebildeten Gewinde 3. In dem gezeigten Ausführungsbeispiel handelt es sich bei dem Gewindeelement 1 um eine, vorzugsweise kaltfliesgepresste, Stahlmutter.

Wie weiter aus Fig. 1 zu entnehmen ist, umfasst das Gewindeelement 1 einen rotationssymmetrischen, außenkonusförmigen Antriebsabschnitt 4. Anders ausgedrückt ist das Gewindeelement 1 an seinem Außenumfang mit einer außenkonusförmigen Mantelfläche 5 versehen. An den kegelstumpfförmigen Antriebsabschnitt 4 schließt auf der von der Sacklochöffnung 2 abgewandten Seite ein gerundeter Kuppelabschnitt 6 an. Das gezeigte Gewindeelement 1 eignet sich, wie später noch erläutert werden wird, zum Festlegen von Flügelrädern auf (schnell) rotierbaren Wellen.

Das Gewindeelement 1 ist rotationssymmetrisch zu einer Längsmittelachse L ausgebildet. Zu erkennen ist, dass eine Mantellinie 7 des Antriebsabschnittes 4, die in einer gemeinsamen Ebene mit der Längsmittelachse L liegt, unter einem Konuswinkel α von in diesem Ausführungsbeispiel etwa 1,4° zur Längsmittelachse L verläuft.

In Fig. 2 ist ein als Schraube, hier als Kopfschraube, ausgebildetes Gewindeelement 1 für den in Fig. 4 gezeigten Abgasturbolader gezeigt. Das Gewindeelement 1 umfasst einen Schaftabschnitt 9 mit einem als Außengewinde ausgebildeten Gewinde 3, hier einem metrischen Gewinde. Axial an den Schaftabschnitt 9 schließt ein Schraubenkopf 10 an. Der Schraubenkopf 10 ist Träger eines Antriebsabschnittes 4 bzw. bildet den Antriebsabschnitt 4. Der Antriebsabschnitt 4 ist außenkonusförmig ausgebildet. Zu erkennen ist, dass eine Mantelfläche 5, genauer eine Mantellinie des Antriebsabschnittes 4 mit einer Längsmittelachse L des Antriebsabschnittes 4 bzw. des Gewindeelementes 1 einen Konuswinkel α von in dem gezeigten Ausführungsbeispiel etwa 1,43° einschließt. Eine gestrichelte Linie 11 deutet eine alternative Ausführungsform mit einem endseitig in der Art eines Hutkopfes abgerundeten Schraubenkopf 9 an.

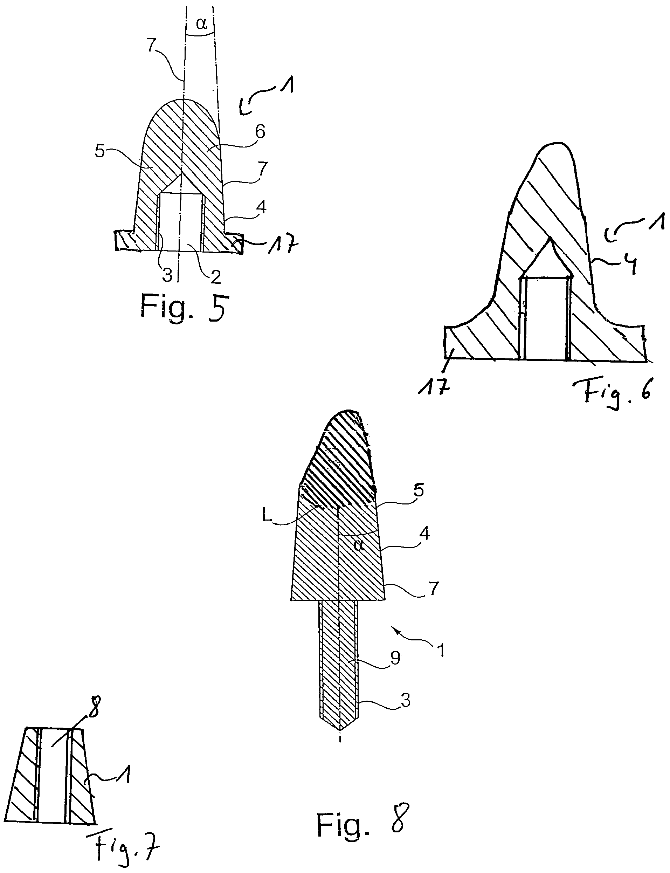

Fig. 3 zeigt einen Schlagschrauber 12 mit einem Antriebswerkzeug 13. Das Antriebswerkzeug 13 ist als Hohlkonus ausgebildet und abschnittsweise formkongruent ausgeformt zu dem konusförmigen Antriebsabschnitt 4 gemäß den Fig. 1 und 2. Das Antriebswerkzeug 13 wird von dem Schlagschrauber 12 rotierend angetrieben. Gleichzeitig werden auf das Antriebswerkzeug 14 in axialer Richtung zeitlich unmittelbar hintereinander Schläge ausgeübt, so dass das zu betätigende Gewindeelement 1 in axialer Richtung gepulst mit einer Axialkraft zur Bereitstellung der notwendigen Haftreibung beaufschlagt wird. Der Schlagschrauber 12 gemäß Fig. 7 ist als Drehmomentschrauber ausgebildet, so dass das maximale Drehmoment begrenzt ist. In dem gezeigten Ausführungsbeispiel ist dieses sogar einstellbar. Zum Verschrauben eines Gewindeelementes 1 wird das Antriebswerkzeug 13 über den entsprechenden Antriebsabschnitt 4 geführt, und es erfolgt eine gepulste Axialkraftbeaufschlagung bei gleichzeitiger Drehmomentbeaufschlagung in Umfangsrichtung. Die Kraftübertragung bzw. Drehmomentübertragung zwischen Antriebswerkzeug 13 und Antriebsabschnitt 4 eines Gewindeelementes 1 erfolgt über Haftreibung.

Fig. 4 zeigt ausschnittsweise eine als Abgasturbolader ausgebildete Vorrichtung 14 mit einer schnell rotierbaren Welle 5, auf der ein Flügelrad 16 sitzt. Das Flügelrad 16 ist in axialer Richtung gesichert von einem strömungsgünstige als Hutmutter ausgebildeten Gewindeelement 1, welches bevorzugt in der Art wie in Fig. 1 dargestellt ausgebildet ist. Das Gewindeelement 1 gemäß Fig. 8 umfasst einen außenkonusförmigen Antriebsabschnitt 4 und einen axialen, abgerundeten Abschluss. Auf der von dem gerundeten Abschluss abgewandten Seite ist eine Sacklochöffnung 2 mit einem als Innengewinde ausgebildetem Gewinde 3 vorgesehen, wobei das als Innengewinde ausgebildete Gewinde 3 mit einem endseitigen Außengewinde der Welle 15 verschraubt ist. Zum Festziehen des Gewindeelementes 1 auf der Welle 15 wird bevorzugt ein Schlagschrauber 12 mit Antriebswerkzeug 13 wie in Fig. 3 dargestellt verwendet.

In Fig. 5 ist ein erfindungsgemäß, als Hutmutter ausgebildetes Gewindeelement 1 zum Fixieren eines Flügelrades auf einer Welle des in Fig. 4 dargestellten Abgasturboladers gezeigt. Das Gewindeelement 1 ist im Wesentlichen wie das Ausführungsbeispiel gemäß Fig. 1 ausgebildet. Hinsichtlich der Gemeinsamkeiten wird zur Vermeidung von Wiederholungen auf die entsprechende Figurenbeschreibung verwiesen. Der einzige Unterschied zum Ausführungsbeispiel gemäß Fig. 1 besteht bei dem Ausführungsbeispiel gemäß Fig. 5 darin, dass das Gewindeelement endseitig, und zwar auf der dem Flügelrad zugewandten Seite, von einem Umfangsbund 17 abgeschlossen wird, der die Mantellinie 7 des außenkonischen Antriebsabschnittes in radialer Richtung überragt. In dem Ausführungsbeispiel gemäß Fig. 5 ist der Übergang zwischen Mantelfläche 5 und Ringfläche des Umfangsbundes 17 als Winkel (etwas größer als 90°) ausgebildet. Alternativ kann der Übergangsbereich als konkaver Radius ausgebildet werden, um das Gewindeelement 1 strömungstechnisch weiter zu optimieren.

Das ebenfalls als Hutmutter ausgebildete, in Fig. 6 dargestellte Gewindeelement 1 umfasst ebenfalls einen flügelradseitigen Umfangsbund 17. Hier ist der Übergangsbereich zwischen dem außenkonusförmigen Antriebsabschnitt 4, der den einzigen Antriebsabschnitt darstellt und den Umfangsbund 17 als Radius ausgebildet. Zu erkennen ist in der Längsschnittansicht gemäß Fig. 6, dass das vor dem Wuchten rotationssymmetrische Gewindeelement 1 in dem vorgenannten Übergangsbereich eine konkave Ausformung erhält.

In Fig. 7 ist eine weitere alternative Ausführungsform eines Gewindeelementes 1 gezeigt. Hierbei handelt es sich nicht um eine Hutmutter, sondern um eine Mutter mit Durchgangsöffnung 8, die mit dem Innengewinde versehen ist. Aus Fig. 7 ergibt sich, dass die beiden voneinander abgewandten Stirnseiten parallel und eben ausgebildet sind. Die Größe der als jeweils als Ringfläche ausgebildeten Stirnseiten ist dabei unterschiedlich. Bei dem Ausführungsbeispiel gemäß Fig. 7 ist das Gewindeelement 1 ohne Umfangsbund ausgebildet. Selbstverständlich ist auch eine derartige Ausführungsvariante mit flügelradseitigem Umfangsbund realisierbar, und zwar mit winkligem, d.h. eckigem bzw. kantigem oder Radius-Übergang.

In Fig. 8 ist ein als Kopfschraube ausgebildetes Gewindeelement 1 gezeigt. Dieses ist vor dem Wuchten analog zu dem Ausführungsbeispiel gemäß Fig. 7 rotationssymmetrisch ausgebildet. Das Ausführungsbeispiel gemäß Fig. 8 entspricht im Wesentlichen dem Ausführungsbeispiel gemäß Fig. 2 mit dem einzigen Unterschied, dass sich der Schraubenkopf 10 auf der vom Flügelrad abgewandten Seite projektilartig verjüngt. Das Ausführungsbeispiel gemäß Fig. 8 kann wie gezeigt ohne oder alternativ mit Umfangsbund ausgebildet werden. Auch ist es möglich das Ausführungsbeispiel gemäß Fig. 2 mit einem derartigen Umfangsbund zu versehen. Im Hinblick auf die Gemeinsamkeiten zu dem Ausführungsbeispiel gemäß Fig. 2 wird auf Fig. 2 mit zugehöriger Figurenbeschreibung verwiesen.

### Bezugszeichenliste

- 1: Gewindeelement
- 2: Sacklochöffnung
- 3: Gewinde
- 4: Antriebsabschnitt
- 5: Mantelfläche
- 6: Kuppelabschnitt
- 7: Mantellinie
- 8: Durchgangsöffnung
- 9: Schaftabschnitt
- 10: Schraubenkopf
- 11: Linie
- 12: Schlagschrauber
- 13: Antriebswerkzeug
- 14: Vorrichtung
- 15: Welle
- 16: Flügelrad
- 17: Umfangsbund

## Patentansprüche

1. Abgasturbolader mit einem auf einer rotierbaren Welle angeordneten Flügelrad (16), das mittels eines Gewindeelementes (1) in axialer Richtung gesichert ist, wobei das ein Gewinde (3) aufweisende Gewindeelement (1) einen Antriebsabschnitt (4) zum Zusammenwirken mit einem Antriebswerkzeug (13) zum Festziehen oder Lösen des Gewindeelementes (1) aufweist, wobei das Gewindeelement (1) als Hutmutter ausgebildet ist,
**dadurch gekennzeichnet,**
**dass** der Antriebsabschnitt (4) als Außenkonusabschnitt ausgeformt ist,
an den Außenkonusabschnitt auf der von dem Flügelrad abgewandten Seite ein gerundeter Kuppelabschnitt (6) anschließt, und
die Hutmutter auf der dem Flügelrad (16) zugewandten Seite einen Umfangsbund (17) aufweist, der den Außenkonusabschnitt in radialer Richtung überragt und der das Gewindeelement (1) flügelradseitig abschließt.

2. Abgasturbolader nach Anspruch 1,
**dadurch gekennzeichnet,**
**dass** am Gewindeelement (1) kein nicht-konischer Antriebsabschnitt (4) vorgesehen ist.

3. Abgasturbolader nach einem der Ansprüche 1 oder 2,
**dadurch gekennzeichnet,**
**dass** das Gewinde (3) als Innengewinde in einer Sacklochöffnung (2) ausgebildet ist.

4. Abgasturbolader nach einem der vorhergehenden Ansprüche,
**dadurch gekennzeichnet,**
**dass** der Konuswinkel zwischen einer Längsmittelachse des Antriebsabschnittes (4) und einer Mantellinie (7) des Antriebsabschnittes (4) aus einem Winkelbereich zwischen etwa 0,2° und etwa 10°, vorzugsweise zwischen etwa 0,2° und etwa 5°, weiter vorzugsweise zwischen etwa 0,5° und etwa 3°, noch weiter vorzugsweise zwischen etwa 0,8° und etwa 2°, bevorzugt zwischen etwa 0,9° und etwa 1,5° gewählt ist und/oder vorzugsweise etwa 1,43° beträgt.

5. Abgasturbolader nach einem der vorhergehenden Ansprüche,
**dadurch gekennzeichnet,**
**dass** der Antriebsabschnitt (4) kegelstumpfförmig ist.

6. Abgasturbolader nach einem der vorhergehenden Ansprüche,
**dadurch gekennzeichnet,**
**dass** das Gewindeelement (3), vorzugsweise im Übergangsbereich zu dem Umfangsbund (17), eine im Längsschnitt konkave Ausformung aufweist.

7. Abgasturbolader nach einem der vorhergehenden Ansprüche,
**dadurch gekennzeichnet,**
**dass** das Gewindeelement (3) zur Gewährleistung eines optimierten Rundlaufs eine, vorzugsweise als Ausfräsung oder Ausbohrung ausgebildete, Aussparung aufweist.

8. System, umfassend einen Abgasturbolader, nach einem der Ansprüche 1 bis 7 und einen Schlagschrauber (12), insbesondere einem Drehmomentschlagschrauber, mit einem, zumindest abschnittsweise, formkongruent zum Antriebsabschnitt (4) des Gewindeelementes (1) ausgeformten Antriebswerkzeug (13).

## Claims

1. An exhaust gas turbocharger comprising an impeller (16), which is arranged on a rotatable shaft and which is secured in axial direction by means of a threaded element (1), wherein the threaded element (1), which has a thread (3), has a drive section (4) for interacting with a drive tool (13) for tightening or loosening the threaded element (1), wherein the threaded element (1) is embodied as cap nut,
**characterized in**
**that** the drive section (4) is formed as external cone section,
a rounded coupling section (6) adjoins the external cone section on the side, which faces away from the impeller, and, on the side, which faces the impeller (16), the cap nut has a peripheral band (17), which projects above the outer cone section in radial direction and which closes the threaded element (1) on the side of the impeller.

2. The exhaust gas turbocharger according to claim 1, **characterized in**
**that** provision is not made on the threaded element (1) for a non-conical drive section (4).

3. The exhaust gas turbocharger according to one of claims 1 or 2,
**characterized in**
**that** the thread (3) is embodied as internal thread in α blind hole opening (2).

4. The exhaust gas turbocharger according to one of the preceding claims,
**characterized in**
**that** the cone angle between a longitudinal central axis of the drive section (4) and a jacket line (7) of the drive section (4) is chosen from an angular range of between approximately 0.2° and approximately 10°, preferably of between approximately 0.2° and approximately 5°, more preferably of between approximately 0.5° and approximately 3°, even more preferably of between approximately 0.8° and approximately 2°, preferably of between approximately 0.9° and 1.5° and/or is approximately 1.43°.

5. The exhaust gas turbocharger according to one of the preceding claims,
**characterized in**
**that** the drive section (4) has the shape of a truncated cone.

6. The exhaust gas turbocharger according to one of the preceding claims,
**characterized in**
**that** the threaded element (1) has a shape, which is concave in longitudinal section, preferably in the transition area to the peripheral band (17).

7. The exhaust gas turbocharger according to one of the preceding claims,
**characterized in**
**that** the threaded element (1) has a recess, which is preferably formed as cutout or borehole, for ensuring an optimized concentricity.

8. A system comprising an exhaust gas turbocharger according to one of claims 1 to 7, and an impact wrench (12), in particular a torque impact wrench, comprising a drive tool (13), which is formed so as to match the form of the drive section (4) of the threaded element (1), at least in sections.

## Revendications

1. Turbocompresseur avec une roue hélice (16) disposée sur un arbre rotatif, qui est fixée en direction axiale au moyen d'un élément fileté (1), dans lequel l'élément fileté (1) présentant un filet (3) présente une partie d'entraînement (4) destinée à coopérer avec un outil d'entraînement (13) pour serrer ou desserrer l'élément fileté (1), dans lequel l'élément fileté (1) est réalisé sous la forme d'un écrou borgne, **caractérisé en ce que** la partie d'entraînement (4) est réalisée en forme de partie de cône extérieur, **en ce qu'**une partie de coupole arrondie (6) se raccorde à la partie de cône extérieur sur le côté situé à l'opposé de la roue hélice, et **en ce que** l'écrou borgne présente sur le côté tourné vers la roue hélice (16) un rebord périphérique (17), qui déborde en direction radiale au-delà de la partie de cône extérieur et qui termine l'élément fileté (1) du côté de la roue hélice.

2. Turbocompresseur selon la revendication 1, **caractérisé en ce qu'**aucune partie d'entraînement non conique (4) n'est prévue sur l'élément fileté (1).

3. Turbocompresseur selon l'une des revendications 1 ou 2, **caractérisé en ce que** le filet (3) est formé par un filet intérieur dans une ouverture en trou borgne (2).

4. Turbocompresseur selon l'une quelconque des revendications précédentes, **caractérisé en ce que** l'angle de cône entre un axe central longitudinal de la partie d'entraînement (4) et une génératrice (7) de la partie d'entraînement (4) est choisi dans une plage angulaire entre environ 0,2° et environ 10°, de préférence entre environ 0,2° et environ 5°, de préférence encore entre environ 0,5° et environ 3°, de préférence particulière encore entre environ 0,8° et environ 2°, et en particulier de préférence entre environ 0,9° et environ 1,5° et/ou vaut de préférence environ 1,43°.

5. Turbocompresseur selon l'une quelconque des revendications précédentes, **caractérisé en ce que** la partie d'entraînement (4) est réalisée en forme de tronc de cône.

6. Turbocompresseur selon l'une quelconque des revendications précédentes, **caractérisé en ce que** l'élément fileté (1) présente, de préférence dans la zone de transition vers le rebord périphérique (17), une déformation concave en coupe longitudinale.

7. Turbocompresseur selon l'une quelconque des revendications précédentes, **caractérisé en ce que** l'élément fileté (1) présente, afin de garantir une concentricité optimisée, un évidement réalisé de préférence sous forme de fraisage ou de forage.

8. Système, comprenant un turbocompresseur selon l'une quelconque des revendications 1 à 7 et une visseuse à percussion (12), en particulier une visseuse à percussion à couple de rotation, avec un outil d'entraînement (13) de forme au moins localement correspondante à la partie d'entraînement (4) de l'élément fileté (1).
